(19) Europäisches Patentamt
European Patent Office
Office européen des brevets

(11) Publication number : **0 340 845 B1**

# (12) EUROPEAN PATENT SPECIFICATION

(45) Date of publication of patent specification :
**14.08.91 Bulletin 91/33**

(51) Int. Cl.⁵ : **E01H 1/08, B60P 3/06, B24C 3/06**

(21) Application number : **89201071.1**

(22) Date of filing : **25.04.89**

(54) **Mobile dust-free grit-blasting plant.**

(30) Priority : **06.05.88 NL 8801189**

(43) Date of publication of application :
**08.11.89 Bulletin 89/45**

(45) Publication of the grant of the patent :
**14.08.91 Bulletin 91/33**

(84) Designated Contracting States :
**AT BE CH DE ES FR GB GR IT LI LU NL SE**

(56) References cited :
**US-A- 3 407 538**
**US-A- 4 636 111**

(73) Proprietor : **GRITSTRAAL- EN HOOGWERKERVERHUURBEDRIJF GEBR. V. GINKEL B.V.**
**Broekstraat 18**
**NL-6675 BE Valburg (NL)**

(72) Inventor : **van Ginkel, Willem**
**Broekstraat 18**
**NL-6675 BE Valburg (NL)**

(74) Representative : **de Bruijn, Leendert C. et al**
**Nederlandsch Octrooibureau**
**Scheveningseweg 82 P.O. Box 29720**
**NL-2502 LS 's-Gravenhage (NL)**

## Description

The invention relates to a dust-free grit-blasting plant, comprising a manually displaceable cabinet supported by wheels, inside which the blasting can be carried out, and an air treatment plant. Such a plant is known from US-A-3,407,538.

Cleaning of a surface by blasting with grit is unpleasant for the environment, because very large quantities of dust are released during the blasting.

Grit-blasting is used outdoors in, for example, the removal of road markings, but also in, for example, cleaning bridge floorings after the asphalt has first been removed.

Although the cabinet known from US-A-3,407,538 tries to put an end to the dust problem the plant cannot be used easily outdoors. After each treatment the cabinet must be loaded on a road vehicle or the like.

The object of the invention is to put an end to the dust problem and also to produce a plant which is mobile and thus simple to use in practice.

The plant according to the invention to this end further comprises a road vehicle with a flat loading platform and a ramp at the rear end of the loading platform, above which the air treatment plant is arranged, during transportation the front wheels of the cabinet resting on the flat loading platform and the rear wheels on the ramp, with the rear wall of the cabinet over the air treatment plant, while in use the front wheels of the cabinet rest on the ramp and the rear wheels on the surface to be blasted, and the front wall engages with the air treatment plant in sealing fashion, while the other walls of the cabinet connect in a sealing manner to the surface to be blasted.

One or more grit tanks and a compressor are preferably set up on the loading platform and are enclosed by the cabinet during transportation.

This produces a very mobile plant, which can be used anywhere and can operate in a dust-free manner.

The invention will be explained in greater detail with reference to a schematic drawing of a preferred example of an embodiment.

The flat loading platform of a conventional trailer is indicated by 1, and the rear wheels are indicated by 2. A stepped ramp 3 is connected to the rear side of the loading platform 1.

The ramp 3 comprises two sloping parts 3a and 3b and a horizontal intermediate part 3c. The sloping part 3b runs through to the ground, but is held free of the road, for example by folding up, during transportation of the road vehicle.

An air treatment plant, comprising an air suction unit 4, an air purification unit, for example a cyclone 5, and an air discharge unit 6, is fitted on the middle part of the ramp 3.

The drive unit for the air treatment plant is indicated by 7 and is fitted on the rear end of the loading platform 1.

The blasting itself takes place inside a box-shaped cabinet 8 with front wheels 9 and rear wheels 10.

The position during transportation is shown by dashed and dotted lines, and the position during blasting by solid lines.

In the transportation position the front wheels 9 rest on the loading platform 1, and the rear wheels 10 on the horizontal part 3c of the ramp 3.

In the in-use position the front wheels 9 rest on the horizontal part 3c and the rear wheels 10 on the surface to be blasted.

In the in-use position the cabinet 8 must be sealed airtight relative to the surface to be blasted.

In order to increase the surface to be treated, the side walls of the cabinet 8 can be extended to a sloping position, pivoting about the top edges. Screens up to the surface to be treated (not shown) are then obtained with cloths made of rubber or the like.

The front wall of the cabinet 8 comprises a flexible strip of rubber or the like, which in the in-use position (solid lines) engages in a sealing manner with the top and sides of the air treatment plant 4, 5, 6.

The rear wall of the cabinet 8 is also partially open, because it lies over the plant 4, 5, 6 when in the transportation position.

In the in-use position this rear wall is closed in an airtight manner and is provided with access means for personnel.

A compressor 11 mounted on the loading platform 1 forces the grit out of a grit tank 12, also mounted on the loading platform 1, through pipes (not shown) at high pressure to jet nozzles (not shown) inside the cabinet 8.

The dust is sucked in with the air through the pipe 4 and cleaned in the cyclone 5, and the clean air is discharged to the atmosphere through the pipe 6.

The grit collected in the cyclone 5 can if desired be fed back to the tank, untreated or after treatment.

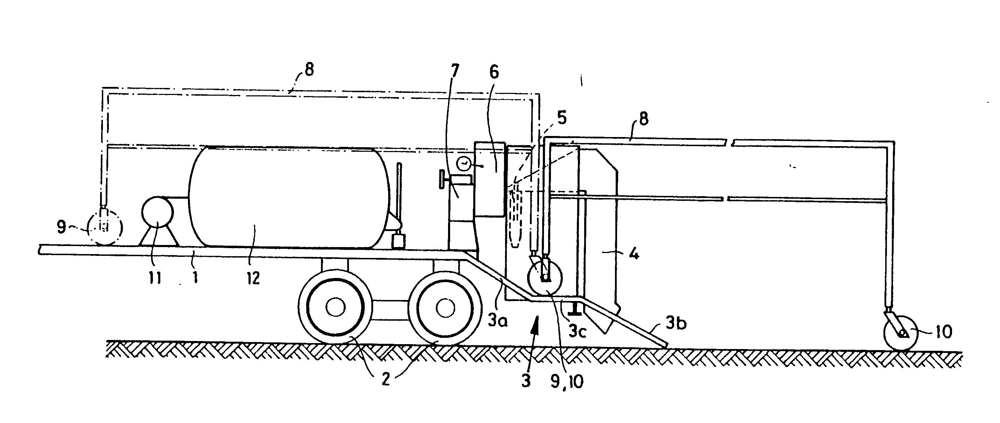

## Claims

1. Dust-free grit-blasting plant, comprising a manually displaceable cabinet (8) supported by wheels (9, 10), inside which the blasting can be carried out, and an air treatment plant, characterized in that the plant further comprises a road vehicle with a flat loading platform (1) and a ramp (3) at the rear end of the loading platform, above which ramp the air treatment plant is arranged, during transportation the front wheels (9) of the cabinet resting on the flat loading platform and the rear wheels (10) on the ramp, with the rear wall of the cabinet over the air treatment plant, while in use the front wheels of the cabinet rest on the ramp and the rear wheels on the surface to be blasted, and the front wall engages with the air treatment plant in sealing fashion, while the other walls of the cabinet connect in a sealing manner to the surface to be blasted.

2. Plant according to Claim 1, characterized in that one or more grit tanks (12) and a compressor (11) are mounted on the loading platform and are surrounded by the cabinet during transportation.

3. Plant according to Claim 1 or 2, characterized in that the floor area of the cabinet in the operating position can be increased widthwise by opening out the side walls.

**Patentansprüche**

1. Staubfreie Gritstrahlanlage mit einer von Hand verschiebbaren, auf Rädern (9, 10) gelagerten Abdeckung (8), in der das Strahlen ausgeführt werden kann, und mit einer Luftbehandlungsanlage, dadurch gekennzeichnet, dass die Anlage weiterhin ein Strassenfahrzeug mit einer flachen Ladefläche (1) und einer Rampe (3) an deren Ende umfasst, über der die Luftbehandlungsvorrichtung angeordnet ist, wobei während des Transports die Vorderräder (9) der Abdeckung auf der flachen Ladefläche und die Hinterräder (10) auf der Rampe bleiben und die Rückwand der Abdeckung über der Luftbehandlungsanlage verbleibt, wobei jedoch während des Betriebes die Vorderräder der Abdeckung auf der Rampe und die Hinterräder auf der zu strahlenden Oberfläche verbleiben und die Vorderseite in dichtender Weise an die Luftreinigungsanlage ankuppelt, während die übrigen Wände der Abdeckung mit der zu strahlenden Oberfläche in dichtender Weise in Verbindung stehen.

2. Anlage nach Anspruch 1, dadurch gekennzeichnet, dass ein oder zwei Grittanks (12) und ein Kompressor (11) auf der Ladefläche angeordnet und während des Transportes von der Abdeckung eingeschlossen sind.

3. Anlage nach Anspruch 1 oder 2, dadurch gekennzeichnet, dass die Grundfläche der Abdeckung in der Betriebsstellung durch Ausstellen der Seitenwände verbreitert werden kann.

**Revendications**

1. Installation de sablage sans poussière, comportant une enceinte (8) déplaçable manuellement supportée par des roues (9, 10), à l'intérieur de laquelle peut être effectué le sablage, et une installation de traitement d'air, caractérisée en ce que l'installation comporte de plus un véhicule routier avec une plate-forme de chargement plate (1) et une rampe (3) à l'extrémité arrière de la plate-forme de chargement, au-dessus de laquelle rampe est disposée l'installation de traitement d'air, les roues avant (9) de l'enceinte reposant sur la plate-forme de chargement plate durant le transport, et les roues arrière (10) reposant sur la rampe durant le transport, la paroi arrière de l'enceinte étant au-dessus de l'installation de traitement d'air, tandis que lors de l'utilisation, les roues avant de l'enceinte reposent sur la rampe et les roues arrière reposent sur la surface à sabler, et la paroi avant vient en contact avec l'installation de traitement d'air de façon étanche, tandis que les autres parois de l'enceinte se connectent de façon étanche à la surface à sabler.

2. Installation selon la revendication 1, caractérisée en ce qu'un ou plusieurs réservoirs (12) de matériau granuleux et un compresseur (11) sont montés sur la plateforme de chargement et sont entourés par l'enceinte durant le transport.

3. Installation selon l'installation 1 ou 2, caractérisée en ce que la zone de plancher de l'enceinte dans la position en fonctionnement peut être augmentée en largeur en ouvrant les parois latérales.

10 3b 4 8 5 6 7 8 3c 3 9,10 3 9,10 3a 2 2 12 1 11 9